# EUROPÄISCHE PATENTANMELDUNG

(11) **EP 4 335 288 A1**
(43) Veröffentlichungstag der Anmeldung: **13.03.2024**
(21) Anmeldenummer: 23193840.8
(22) Anmeldetag: 29.08.2023
(51) Int. Cl.: A01K 39/014

(54) **BAUSATZ FÜR FUTTERHÄUSCHEN**

(30) Priorität: 07.09.2022 DE 102022122684
(71) Anmelder: Gust. Alberts GmbH & Co. KG, 58849 Herscheid (DE)
(72) Erfinder: Alberts, Alexander, 58511 Lüdenscheid (DE)
(74) Vertreter: Beckmann, Jürgen

(57) **Zusammenfassung**

Die Erfindung betrifft Bausätze für Futterhäuschen (FH) oder dergleichen. Gemäß einer Ausführungsform enthält ein Bausatz dabei eine Basisplatte (BP) mit mindestens drei Feldern (F1-F6, F11-F16), welche entlang von geraden Knicklinien (KL) aneinandergrenzen. Durch Knicken entlang der Knicklinien kann die Basisplatte in eine dreidimensionale Konfiguration mit einem Dach und einem Boden gebracht werden.

## Beschreibung

Die Erfindung betrifft einen Bausatz für Futterhäuschen oder ähnliche Einrichtungen.

Im Freien aufzustellende Futterhäuschen für Tiere wie insbesondere Vögel oder Eichhörnchen sind in zahlreichen Ausführungsformen bekannt. Sie dienen dazu, den Tieren Futter an einem sicheren, vor Niederschlag weitgehend geschützten und gut zugänglichen Platz präsentieren zu können. Bekannte Futterhäuschen sind dabei typischerweise sehr aufwendig in Handarbeit aus Holz hergestellt.

Vor diesem Hintergrund war es Aufgabe der vorliegenden Erfindung, Mittel zur vereinfachten Herstellung eines Futterhäuschens bereitzustellen, wobei das Futterhäuschen sowohl solide als auch optisch ansprechend sein soll.

Diese Aufgabe wird durch einen Bausatz mit den Merkmalen von Anspruch 1, von Anspruch 2 und von Anspruch 8 gelöst. Vorteilhafte Ausgestaltungen sind in den Unteransprüchen enthalten.

Gemäß einem ersten Aspekt betrifft die Erfindung einen Bausatz für ein Futterhäuschen oder dergleichen, welcher eine Basisplatte mit mindestens drei Feldern enthält, wobei die Felder entlang von geraden Knicklinien so aneinandergrenzen, dass sie durch Knicken entlang der Knicklinien in eine Konfiguration gebracht werden können, in welcher sie einen Innenraum mit einem Dach und einem Boden bilden.

Das aus dem Bausatz hergestellte Objekt kann insbesondere als ein Futterhäuschen für Tiere eingesetzt werden, aber auch für zahlreiche andere Funktionen wie beispielsweise als ein Tierkäfig, als ein Gehäuse für ein Insektenhotel oder dergleichen. Wenn nachfolgend stellvertretend von einem "Futterhäuschen" die Rede ist, sind derartige Anwendungen immer eingeschlossen.

Die Basisplatte des Bausatzes ist typischerweise (jedoch nicht notwendigerweise) eben, sodass sie sich einfach aus einer großen Materialbahn herstellen und Platz sparend transportieren bzw. lagern lässt. Die dreidimensionale Form des fertigen Futterhäuschens wird aus der Basisplatte dann durch Knicken ihrer Felder entlang der Knicklinien erzeugt, wobei sich je nach Anordnung der Felder und der Knicklinien sowie nach Ausführung des Knickens eine große Anzahl verschiedener Konfigurationen herstellen lässt. Gemeinsam ist diesen jedoch, dass im fertigen Futterhäuschen ein Boden für die Ablage von Futter oder dergleichen sowie ein Dach für den Schutz des Bodens vor Niederschlag vorhanden ist.

Das Material der Basisplatte ist in weiten Grenzen frei wählbar, wobei selbstverständlich die gewünschte Stabilität und Wetterbeständigkeit sowie die Biegsamkeit entlang der Knicklinie gewährleistet sein müssen. Vorzugsweise besteht die Basisplatte aus einem Metall wie beispielsweise Eisen, Stahl, Edelstahl, Aluminium, Kupfer oder dergleichen. Zum Schutz der Oberfläche vor Korrosion kann diese entsprechend behandelt sein, z.B. durch Verzinken.

Die Form der Felder der Basisplatte ist grundsätzlich beliebig. Gemäß einer bevorzugten Ausführungsform ist jedoch mindestens eines der Felder rechteckig. Vorzugsweise sind alle Felder der Basisplatte rechteckig.

Die gesamte Grundform der Basisplatte kann ebenfalls in weiten Grenzen variieren je nach Zusammenstellung der einzelnen Felder und den beabsichtigten Knickvorgängen. Besonders bevorzugt ist es, wenn die Basisplatte im Wesentlichen rechteckig ist. In diesem Falle lässt sich die Basisplatte besonders materialsparend herstellen.

Mindestens eines der Felder der Basisplatte kann ein oder mehrere Durchgangslöcher aufweisen. Hierbei kann es sich beispielsweise um kreisrunde Löcher oder Langlöcher für die Aufnahme von Schrauben handeln (typische Durchmesser: 2-15 mm), oder um rechteckige Ausnehmungen für das Durchstecken von Stäben oder dergleichen.

Gemäß einem zweiten Aspekt betrifft die Erfindung einen Bausatz für ein Futterhäuschen oder dergleichen, welcher eine Basisplatte mit mindestens zwei Feldern enthält, wobei die Felder entlang von geraden Knicklinien so aneinandergrenzen, dass sie durch Knicken entlang der Knicklinien in eine Konfiguration gebracht werden können, in welcher sie ein Dach bilden, wobei mindestens eines der Felder ein oder mehrere Durchgangslöcher für eine Schraubbefestigung aufweist. Optional kann der Bausatz auch die Eigenschaften eines Bausatzes gemäß dem ersten Aspekt haben.

Das Feld mit den Durchgangslöcher kann insbesondere in eine im Wesentlichen vertikale Position relativ zu den anderen Feldern (Dachfeldern) gebracht werden und dann dazu genutzt werden, die geknickte Ausgangsplatte an einer Wand oder dergleichen festzuschrauben.

Nachfolgend werden bevorzugte Ausgestaltungen der beschriebenen Bausätze erläutert.

Die Lage der Felder in der Basisplatte hängt davon ab, welche endgültige dreidimensionale Konfiguration das Futterhäuschen haben soll. Insbesondere können die Felder (bzw. mindestens drei der Felder) in der Basisplatte in einer Reihe hintereinanderliegend angeordnet sein.

Bei einer weiteren Ausführungsform des Bausatzes grenzt mindestens ein Feld der Basisplatte an maximal zwei andere Felder der Basisplatte, wobei diese angrenzenden Felder nicht direkt miteinander verbunden sind. Die angrenzenden Felder können dann unabhängig voneinander relativ zum ersten Feld gebogen werden. Vorzugsweise ist die genannte Bedingung für alle Felder der Basisplatte erfüllt.

Die Knicklinien der Basisplatte können im einfachsten Falle nur konzeptionell vorgesehene Linien sein, entlang derer ein Knick erfolgen muss, um eine gewünschte dreidimensionale Konfiguration zu erzeugen. Vorzugsweise sind die Knicklinien indes so ausgestaltet, dass bei Ausübung entsprechender Biegespannungen die Basisplatte vorzugsweise entlang dieser Linien knickt, d.h. eine mehr oder weniger scharfe Biegung erfährt. Eine solche im Material angelegte Knicklinie kann insbesondere durch eine Materialschwächung erfolgen, beispielsweise durch eine Nut in der Materialoberfläche und/oder durch eine Perforation mit einer Reihe von Löchern, Längsschlitzen oder dergleichen.

Die Felder der Basisplatte können je nach gewünschter Konfiguration des Futterhäuschens verschiedene Größen haben. Insbesondere kann mindestens eines der Felder eine Breite von weniger als ca. 50%, vorzugsweise weniger als ca. 20%, besonders bevorzugt weniger als ca. 10% der Breite des über eine Knicklinie angrenzenden Feldes aufweisen. Die Breite der Felder wird dabei typischerweise senkrecht zur genannten Knicklinie gemessen. Derartige schmale Felder können insbesondere dazu verwendet werden, größeren Flächen wie beispielsweise einem Boden oder einem Dach eine abknickende Kante als Randbegrenzung (Seitenkante), Tropfkante oder dergleichen zu verleihen.

Gemäß einem dritten Aspekt betrifft die Erfindung einen Bausatz für ein Futterhäuschen oder dergleichen, welcher mindestens zwei Basisplatten enthält, die formschlüssig miteinander verbunden werden können, wobei mindestens eine der Basisplatten eine gebogene Konfiguration annimmt, in welcher sie zusammen mit der anderen Basisplatte einen Innenraum mit einem Dach und einem Boden bildet. Optional kann der Bausatz auch die Eigenschaften eines Bausatzes gemäß dem ersten und/oder zweiten Aspekt haben. Generell gelten Erläuterungen, welche zu einem Bausatz gemäß einem Aspekt gemacht wurden, auch für die Bausätze der jeweils anderen Aspekte (sofern es sich nicht um die definierenden Merkmale des jeweiligen Aspektes handelt).

Durch die gebogene Konfiguration der mindestens einen Basisplatte wird auf der Biegungsinnenseite ein Raum gebildet, welcher den Innenraum des gewünschten Futterhäuschens darstellen kann. Die Biegung der Basisplatte verbindet dabei eine einfache Herstellung mit einem gefälligen Aussehen. Vorzugsweise erstreckt sich die Biegung im Wesentlichen gleichmäßig über die gesamte Länge der Basisplatte.

Zur formschlüssigen Verbindung können die beiden Basisplatten insbesondere mindestens jeweils einen Schlitz aufweisen, sodass sie kammartig miteinander verbunden werden können. Dabei nimmt jeweils der Schlitz einer Basisplatte die Materialbrücke auf, welche der Schlitz der anderen Basisplatte stehen lässt.

Die Erfindung betrifft weiterhin Futterhäuschen, wie sie unter Verwendung von einem der beschriebenen Bausätze hergestellt werden können. Diese Futterhäuschen können dabei insbesondere ein spitzes Dach, ein Flachdach und/oder mindestens eine Seitenwand aufweisen.

Des Weiteren ist in Verbindung mit den Bausätzen ein Verfahren zur Herstellung eines Futterhäuschens offenbart, welches die folgenden Schritte enthält:
- Bereitstellung einer Basisplatte aus einem Bausatz gemäß dem ersten Aspekt der Erfindung;
- Knicken der Felder der Basisplatte entlang der Knicklinien in eine dreidimensionale Konfiguration, in welcher sie einen Innenraum mit einem Dach und einem Boden bilden.

Ein weiteres Verfahren zur Herstellung eines Futterhäuschens umfasst die Schritte:
- Bereitstellung von mindestens zwei Basisplatten aus einem Bausatz gemäß dem dritten Aspekt der Erfindung;
- formschlüssige Verbindung der Basisplatten miteinander und Biegung mindestens einer Basisplatte in eine gebogene Konfiguration, sodass die beiden Basisplatten einen Innenraum mit einem Dach und einem Boden bilden.

Nachfolgend werden verschiedene Ausführungsformen der Erfindung anhand der Figuren näher erläutert. Dabei zeigt:
- Figur 1: ein in der Seitenansicht dreieckiges Futterhäuschen;
- Figur 2: eine Draufsicht der zugehörigen Basisplatte;
- Figur 3: ein Futterhäuschen mit Spitzdach und einer Seitenwand;
- Figur 4: eine Draufsicht der zugehörigen Basisplatte;
- Figur 5: ein Futterhäuschen mit Flachdach und einer Seitenwand;
- Figur 6: eine Draufsicht der zugehörigen Basisplatte;
- Figur 7: ein Futterhäuschen mit Flachdach und zwei Seitenwänden;
- Figur 8: eine Draufsicht der zugehörigen Basisplatte;
- Figur 9: ein Futterhäuschen mit Spitzdach, einer Seitenwand und zwei vertikal versetzten Böden;
- Figur 10: eine Draufsicht der zugehörigen Basisplatte;
- Figur 11: ein Spitzschutzdach als Futterhäuschen;
- Figur 12: eine Draufsicht von zwei Ausführungsformen zugehöriger Basisplatten;
- Figur 13: ein Trapezschutzdach als Futterhäuschen;
- Figur 14: die Draufsicht der zugehörigen Basisplatte;
- Figur 15: ein Schrägschutzdach als Futterhäuschen;
- Figur 16: die Draufsicht der zugehörigen Basisplatte;
- Figur 17: ein U-förmiges Schutzdach als Futterhäuschen;
- Figur 18: die Draufsicht der zugehörigen Basisplatte;
- Figur 19: ein Futterhäuschen mit gebogenen Basisplatten;
- Figur 20: eine Draufsicht der zugehörigen Basisplatten.

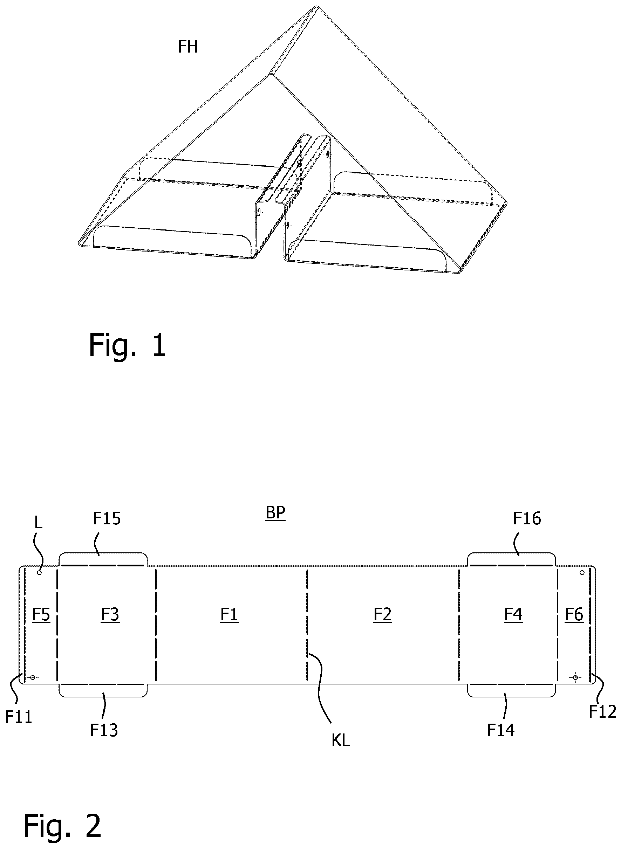

In Figur 1 ist ein Futterhäuschen FH für Vögel, Eichhörnchen und/oder andere Tiere dargestellt, welches gemäß einem ersten Aspekt aus einer im Wesentlichen rechteckigen ebenen Basisplatte BP durch Knicken entlang von Knicklinien gebildet werden kann.

Die zugehörige ursprüngliche Basisplatte BP ist in Figur 2 dargestellt und besteht aus zwölf rechteckigen Feldern F1-F6, F11-F16, die direkt oder indirekt miteinander über (insgesamt elf) Knicklinien KL verbunden sind. Acht der Felder F1-F6, F11, F12 liegen in gerader Linie in einer Reihe hintereinander. Entlang einer Knicklinie KL ist das Material der Basisplatte BP, welches typischerweise Edelstahl oder verzinktes Blech ist, mit Löchern oder Schlitzen perforiert. In den Zeichnungen sind die Knicklinien KL durch gestrichelte Linien dargestellt, wobei die Striche der Linien typischerweise Schlitzen der Perforation entsprechen.

Die beiden mittigen und größten Felder F1 und F2 bilden im fertigen Futterhäuschen FH die beiden Dachflächen eines Spitzdaches. Die daran angrenzenden, etwas kleineren Flächen F3 und F4 bilden jeweils links und rechts einer Mittellinie einen Abschnitt des horizontalen Bodens des Futterhäuschens FH.

Zur Positionierung des Futterhäuschens auf einem Träger wie beispielsweise einem Brett ist entlang der Mittellinie des Bodens eine nach unten offene Rinne ausgebildet, in welche der Träger von unten eingreifen kann. Diese Rinne wird durch die senkrecht nach oben ausgerichteten Felder F5 und F6 sowie die davon horizontal abgewinkelten und einander überlappenden Felder F11 und F12 gebildet.

In einigen Feldern (z.B. F5 und F6) können sich vorgefertigte Löcher befinden, durch welche das Futterhäuschen an einem Träger oder dergleichen mit Nägeln oder Schrauben befestigt werden kann.

Optional können sich an den beiden Bodenfeldern F3 und F4 seitlich noch schmalere Felder F13 und F15 bzw. F14 und F16 anschließen. Diese können im fertigen Futterhäuschen beispielsweise nach oben gebogen sein, um als Randbegrenzung das Herausfallen von Futter aus dem Bodenbereich zu verhindern.

Die gesamte Länge der Basisplatte BP von Figur 2 beträgt beispielsweise ca. 866 mm, ihre Breite ca. 200 mm.

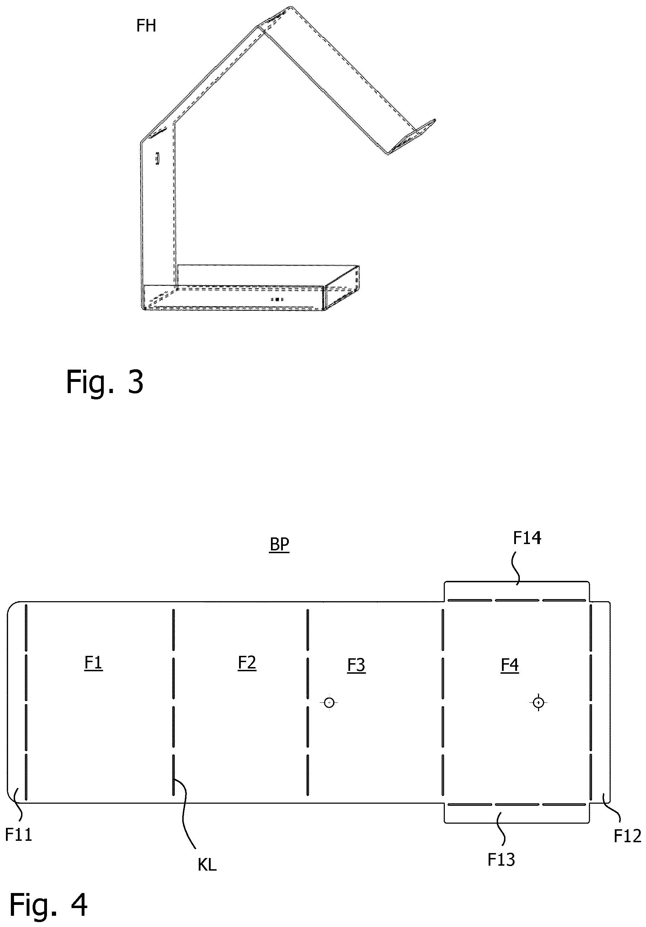

In Figur 3 ist eine Ausführungsform eines Futterhäuschens FH mit einem Spitzdach und einer Seitenwand dargestellt. Figur 4 zeigt die zugehörige Basisplatte BP, welche zwei Felder F1 und F2 für das Spitzdach, ein Feld F3 für die Seitenwand und ein Feld F4 für den Boden enthält. Optional sind schmalere Kanten F11 (am äußeren Dachfeld F1) bzw. F12, F13 und F14 (an den Rändern des Bodens F4) vorgesehen, welche in geeigneter Weise nach oben oder unten stehend gebogen werden können, um Regenabtropfkanten und/oder Randbegrenzungen zu bilden.

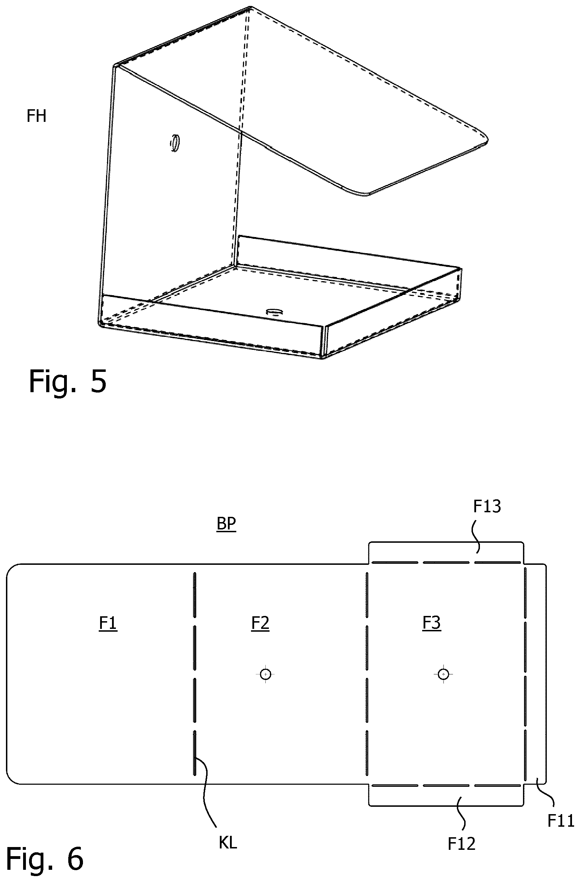

In Figur 5 ist eine Ausführungsform eines Futterhäuschens FH mit einem Flachdach und einer Seitenwand dargestellt. Figur 6 zeigt die zugehörige Basisplatte BP, welche ein Feld F1 für das Flachdach, ein Feld F2 für die Seitenwand und ein Feld F3 für den Boden enthält. Optional sind schmalere Kanten F11, F12 und F13 an den Rändern des Bodens F3 vorgesehen, welche in geeigneter Weise nach oben stehend gebogen werden können, um Randbegrenzungen zu bilden.

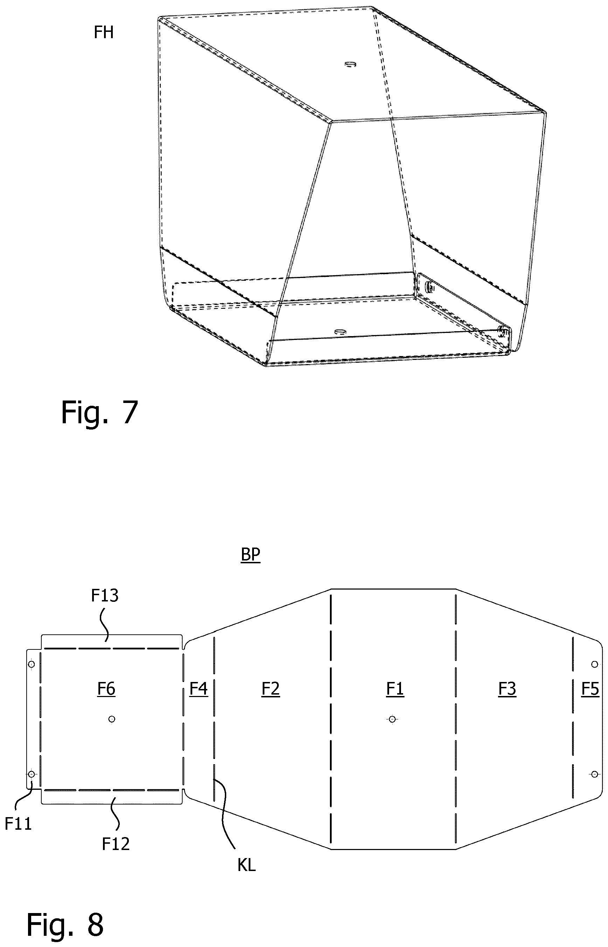

In Figur 7 ist eine Ausführungsform eines Futterhäuschens FH mit einem Flachdach und zwei Seitenwänden dargestellt. Figur 8 zeigt die zugehörige Basisplatte BP, welche ein Feld F1 für das Flachdach, vier Felder F2-F5 für die Seitenwände und ein Feld F6 für den Boden enthält. Optional sind schmalere Kanten F11, F12 und F13 an den Rändern des Bodens F6 vorgesehen, welche in geeigneter Weise nach oben stehend gebogen werden können, um Randbegrenzungen zu bilden. Bei der Basisplatte BP von Figur 8 ist das Dachfeld F1 breiter als das Bodenfeld F6. Die Seitenfelder F2, F3, F4 und F5 sind dementsprechend trapezförmig ausgebildet, um einen stetigen Übergang herzustellen.

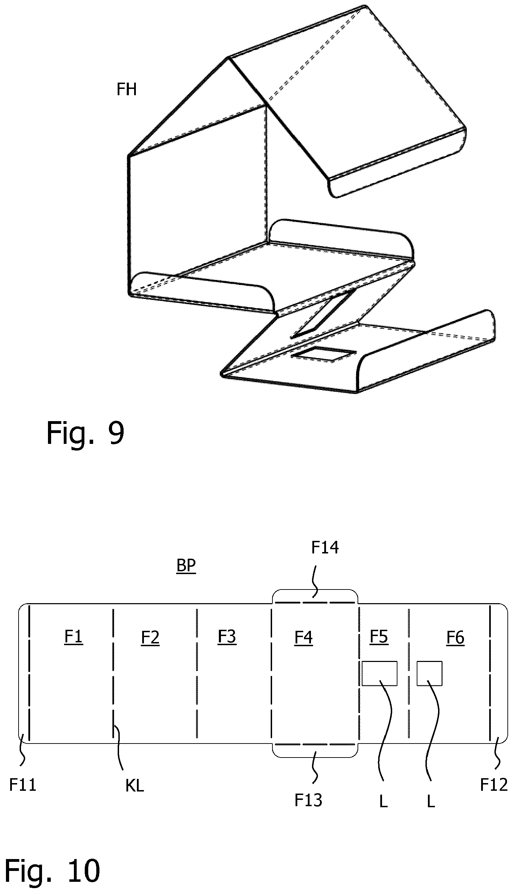

In Figur 9 ist eine Ausführungsform eines Futterhäuschens FH mit einem Spitzdach, einer Seitenwand und einem Z-förmig geknickten Boden dargestellt. Figur 10 zeigt die zugehörige Basisplatte BP, welche zwei Felder F1 und F2 für das Spitzdach, ein Feld F3 für die Seitenwand, zwei Felder F4 und F6 für zwei vertikal zueinander versetzte Bodenebenen, die durch ein Verbindungsfeld F5 verbunden werden, enthält. Optional sind schmalere Kanten F11 (an der äußeren Dachfläche F1), F12 (an der unteren Bodenebene F6) sowie F13 und F14 (an der oberen Bodenebene F4) vorgesehen, welche in geeigneter Weise nach oben oder unten gebogen werden können, um Regenabtropfkanten oder Randbegrenzungen zu bilden. Ferner sind in der unteren Bodenebene F6 und in dem Verbindungsfeld F5 jeweils (z.B. rechteckige) Durchbrechungen L vorgesehen, welche einen Trägerstab aufnehmen können.

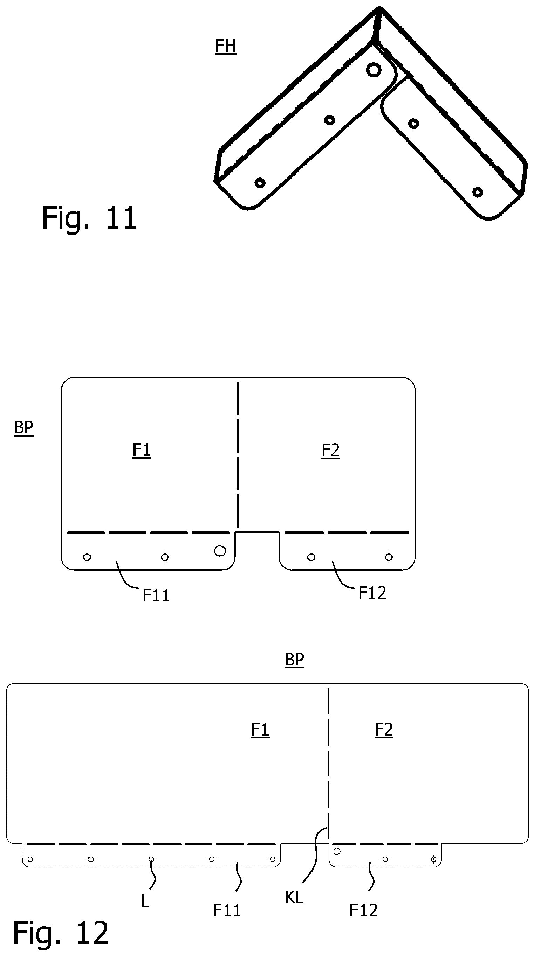

In Figur 11 ist eine andere Ausbildung eines Häuschens FH gemäß einem zweiten Aspekt dargestellt, bei welchem aus dem Bausatz im Wesentlichen nur ein (Spitz-)Dach gebildet wird. Unter dem Dach kann beispielsweise ein Futterplatz oder ein Insektenhotel angeordnet werden.

Figur 12 zeigt zwei Ausführungsformen von zugehörigen Basisplatten BP, die ein erstes Feld F1 für eine Seitenwand und ein zweites Feld F2 für ein Dachfläche (oder umgekehrt) aufweisen. An die beiden genannten Flächen grenzen an derselben Längskante schmalere Felder F11 und F12 an, welche jeweils mehrere Durchgangslöcher L aufweisen. Diese Löcher können für eine Schraubbefestigung der geknickten Basisplatte an einen Träger wie beispielsweise einem Pfosten genutzt werden.

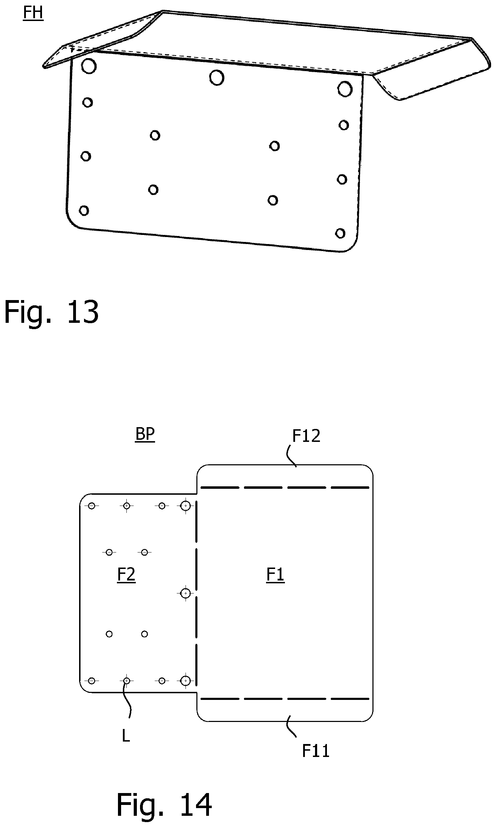

Weitere Basisplatten BP für die Bildung von Dächern sind in den Figuren 13-18 dargestellt.

Dabei zeigen Figur 13 und 14 ein Trapezschutzdach und die Draufsicht einer zugehörigen Basisplatte für, wobei zwei an das Dachfeld F1 angrenzende schmalere Felder F11 und F12 als Regenabtropfkanten nach unten gebogen werden können.

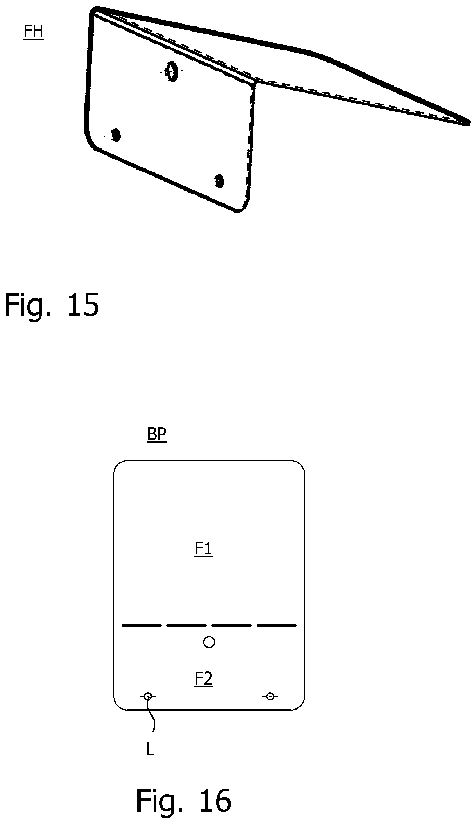

Die Figuren 15 und 16 zeigen ein Schrägschutzdach und die zugehörige Basisplatte, wobei eine ebene Dachfläche F1 von einer Trägerfläche F2 unter einem vom Nutzer wählbaren Winkel abknickt.

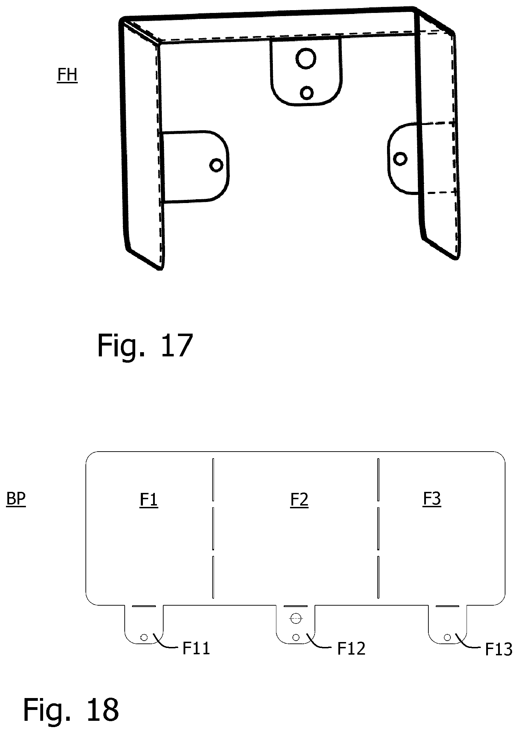

Die Figuren 17 und 18 zeigen ein U-förmiges Schutzdach und die zugehörige Basisplatte, wobei eine mittlere Dachfläche F2 zwischen zwei Seitenfeldern F1 und F3 liegt. Alle Felder tragen laschenförmige, über eine Knicklinie angrenzende Felder F11, F12 und F13 mit Löchern für eine Schraubbefestigung.

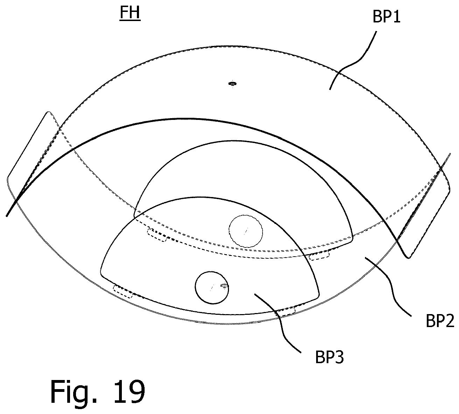

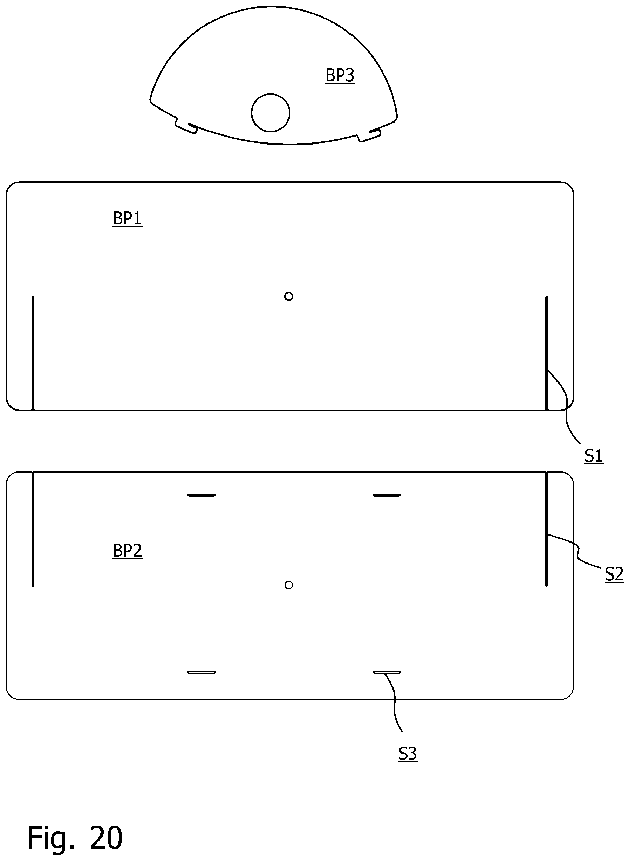

Die Figuren 19 und 20 zeigen ein Futterhäuschen FH bzw. den zugehörigen Bausatz gemäß einem dritten Aspekt. Hierbei sind zwei große Basisplatten BP1 und BP2 formschlüssig miteinander verbunden, so dass sie in einer gegensinnig gebogenen Konfiguration einen Innenraum zwischen sich ausbilden. In diesem Innenraum können ferner ein oder zwei Wandflächen durch linsenförmige kleinere Basisplatten BP3 vorgesehen werden. Vorzugsweise werden Letztere über eine bajonettartige Steckverbindung mit Schlitzen S3 der als Boden dienenden großen Basisplatte BP2 verbunden und tragen durch ihre Krümmung dazu bei, die großen Basisplatten in ihrer gebogenen Form zu halten.

Die beiden großen Basisplatten BP1 und BP2 weisen senkrecht zur Längskante nahe der Querkanten etwa bis zur Mitte gehende jeweils zwei Schlitze S1 bzw. S2 auf. Über diese Schlitze können die beiden großen Basisplatten kammartig ineinandergesteckt und so formschlüssig verbunden werden.

## Patentansprüche

1. Bausatz für ein Futterhäuschen (FH) oder dergleichen, enthaltend eine Basisplatte (BP) mit mindestens drei Feldern (F1-F6, F11-F16), welche entlang von geraden Knicklinien (KL) so aneinandergrenzen, dass sie durch Knicken entlang der Knicklinien (KL) in eine Konfiguration gebracht werden können, in welcher sie einen Innenraum mit einem Dach und einem Boden bilden.

2. Bausatz für ein Futterhäuschen (FH) oder dergleichen, insbesondere nach Anspruch 1, enthaltend eine Basisplatte (BP) mit mindestens zwei Feldern (F1-F6, F11-F16), welche entlang von geraden Knicklinien (KL) so aneinandergrenzen, dass sie durch Knicken entlang der Knicklinien (KL) in eine Konfiguration gebracht werden können, in welcher sie ein Dach bilden, wobei mindestens eines der Felder ein oder mehrere Durchgangslöcher (L) für eine Schraubbefestigung aufweist.

3. Bausatz nach Anspruch 2 oder 3,
**dadurch gekennzeichnet, dass** mindestens eines der Felder (F1-F6, F11-F16) rechteckig ist und/oder dass die Basisplatte (BP) im Wesentlichen rechteckig ist.

4. Bausatz nach mindestens einem der vorhergehenden Ansprüche,
**dadurch gekennzeichnet, dass** die Felder (F1-F6, F11, F12) in der Basisplatte (BP) hintereinanderliegend angeordnet sind.

5. Bausatz nach mindestens einem der vorhergehenden Ansprüche,
**dadurch gekennzeichnet, dass** mindestens ein Feld (F1-F6, F11-F16) an maximal zwei andere Felder grenzt, wobei diese angrenzenden Felder nicht direkt miteinander verbunden sind.

6. Bausatz nach mindestens einem der vorhergehenden Ansprüche,
**dadurch gekennzeichnet, dass** mindestens eine der Knicklinien (KL) durch eine Materialschwächung gebildet wird, insbesondere durch eine Perforation.

7. Bausatz nach mindestens einem der vorhergehenden Ansprüche,
**dadurch gekennzeichnet, dass** mindestens eines der Felder (F11-F16) eine Breite von weniger als 50% der Breite des über eine Knicklinie (KL) angrenzenden Feldes (F1-F6) hat.

8. Bausatz für ein Futterhäuschen (FH) oder dergleichen, insbesondere nach mindestens einem der Ansprüche 1 bis 7, enthaltend mindestens zwei Basisplatten (BP1, BP2), welche formschlüssig miteinander verbunden werden können, wobei mindestens eine der Basisplatten (BP1, BP2) eine gebogene Konfiguration annimmt, in welcher sie zusammen mit der anderen Basisplatte einen Innenraum mit einem Dach und einem Boden bildet.

9. Bausatzanspruch nach Anspruch 8,
**dadurch gekennzeichnet, dass** die Basisplatten (BP1, BP2) jeweils einen Schlitz (S1, S2) aufweisen, sodass sie kammartig ineinandergesteckt werden können.

10. Futterhäuschen (FH), erhältlich aus einem Bausatz nach einem der Ansprüche 1 bis 9.
